Europäisches Patentamt

European Patent Office

Office européen des brevets

(19)

(11) EP 0 534 035 B1

(12) EUROPÄISCHE PATENTSCHRIFT

(45) Veröffentlichungstag und Bekanntmachung des Hinweises auf die Patenterteilung:
01.05.1996 Patentblatt 1996/18

(51) Int Cl.⁶: **G03B 27/62**, G03D 15/00

(21) Anmeldenummer: 91810758.2

(22) Anmeldetag: 26.09.1991

(54) **Fotografisches Kopiergerät und Betriebsverfahren**

Photographic printing apparatus and method of operation

Imprimante photographique et méthode de fonctionnement

(84) Benannte Vertragsstaaten:
**CH DE DK FR GB IT LI**

(43) Veröffentlichungstag der Anmeldung:
**31.03.1993 Patentblatt 1993/13**

(73) Patentinhaber: **GRETAG IMAGING AG**
**CH-8105 Regensdorf (CH)**

(72) Erfinder: **Frick, Beat Dr.**
**CH-8107 Buchs (CH)**

(74) Vertreter: **Kleewein, Walter, Dr. et al**
**Patentabteilung**
**CIBA-GEIGY AG**
**Postfach**
**CH-4002 Basel (CH)**

(56) Entgegenhaltungen:
EP-A- 0 423 810          DE-A- 3 737 797
DE-A- 3 833 731          DE-A- 3 833 732
DE-A- 3 935 915          DE-A- 4 000 796
GB-A- 2 032 633

## Beschreibung

Die Erfindung betrifft ein fotografisches Kopiergerät gemäss Oberbegriff des Patentanspruchs 1 sowie ein Verfahren zum Betrieb eines derartigen Kopiergerätes gemäss Oberbegriff des Patentanspruchs 8.

Fotografische Kopiergeräte verarbeiten in einer Filmentwicklungsmaschine entwickelten fotografischen Film weiter. Der im allgemeinen nicht gekerbte fotografische Film durchläuft in einem sogenannten Filmpfad mehrere Behandlungsstationen, beispielsweise eine Messstation, eine Belichtungsstation oder schliesslich eine Schneidestation. In der Messstation werden die für die Bestimmung der richtigen Belichtung erforderlichen Daten und deren Position auf dem Film erfasst und die Daten an eine Rechen- und Auswertestation weitergeleitet. In der Belichtungsstation werden dann anhand der berechneten Belichtungsdaten, beispielsweise für die Grundfarben Rot, Grün und Blau, und der zugehörigen Positionsdaten auf dem fotografischen Film die Belichtungen ausgeführt. Zu diesem Zweck ist es erforderlich, die in der Messstation gewonnenen Messdaten eindeutig einem Ort auf dem Film zuzuordnen und in der räumlich von der Messstation getrennten repositionierenden Station, hier der Belichtungsstation, diesen Ort mit sehr geringer Toleranz zu positionieren. Beispielsweise muss eine Kopiervorlage auf dem Film (das heisst z.B. ein Negativbild) mit einer tolerierbaren Abweichung von maximal 0,5 mm im Bereich eines Belichtungsfensters angeordnet werden. Es ist leicht einsichtig, dass dies bei modernen fotografischen Kopiergeräten mit hohen Durchsatzleistungen, insbesondere bei sogenannten Hochleistungsprintern mit einer Verarbeitungsleistung von 20.000 und mehr Bildern in der Stunde, kein einfaches Unterfangen ist.

Zum Beispiel ergeben sich grosse Schwierigkeiten als Folge von Toleranzen und Abnutzungseffekten der Mechanik des Kopiergerätes. Der Transport des Filmes durch den Filmpfad erfolgt im allgemeinen durch Reibung zwischen der Filmoberfläche und den Transportrollen. So kann beispielsweise der Rollenradius der Filmtransportrollen vom Sollradius abweichen, dies sowohl bereits durch Fabrikationstoleranzen bedingt als auch durch Abnutzung durch Abrieb hervorgerufen. Auch kann der Rollenradius durch temperaturbedingtes "Walken" der mit einer Gummischicht versehenen Transportrollen variieren. Ein weiteres grosses Problem, das bereits in der Messstation auftritt und sich auch in der räumlich davon getrennt angeordneten weiteren Behandlungsstation (z.B. Belichtungsstation oder Schneidestation) nachteilig bemerkbar machen kann, ist der Schlupf zwischen Filmoberfläche und den Transportrollen. Zwar kann das Problem des Schlupfes durch die Verwendung von Transportrollen mit einem sehr hohen Reibwert vermindert werden, derartige Rollen weisen aber im allgemeinen einen sehr hohen Abrieb auf, der wiederum, siehe oben, den Rollendurchmesser verändert. Abriebfeste Transportrollen mit glatten Oberflächen andererseits führen zu erhöhtem Schlupf. Eine Erhöhung des Andruckes der Transportrollen auf den Film schliesslich ist auch nur in geringem Masse möglich, da dabei die Gefahr einer Beschädigung der Filmoberfläche besteht.

Ein Verfahren zur Verarbeitung von entwickelten fotografischen Filmen und eine Vorrichtung zur Durchführung dieses Verfahrens, welches die geschilderten Probleme beheben soll, ist Gegenstand der DE-A-38 33 731. Dabei wird in der Messstation die Lage der Bildfelder durch fotoelektrische Abtastung in einem senkrecht zur Transportrichtung verlaufenden Messspalt ermittelt. In einer um eine grössere Filmlänge dazu versetzten Bearbeitungsstation wird der Film in räumlicher Zuordnung zu den ermittelten Bildfeldern bearbeitet. Der Transport des Bildfeldes von der Messstation zu der Bearbeitungsstation wird aufgrund einer Messung der transportierten Filmlänge gesteuert. Zu diesem Zweck werden in der Messstation erkannte Bildkanten und/oder markante Dichteänderungen im Bereich der Bildfelder mit ihren Werten und Längskoordinaten gespeichert. Kurz vor der Bearbeitungsstation wird der Film erneut auf Bildkanten und/oder markante Dichteänderungen abgetastet und werden die zugehörigen Längskoordinaten ermittelt. Die beiden Abtastungen werden miteinander verglichen, und bei Abweichungen der Längskoordinaten werden die Weglängenmesser für die zweite Abtastung entsprechend korrigiert. Ein ähnliches Verfahren sowie eine weitere derartige Vorrichtung ist aus der DE-A 3 737 797 bekannt, wo weiterhin Sensoren zur Erfassung der Perforations löcher des Films verwendet werden.

Bei diesem Verfahren und der Vorrichtung des Standes der Technik basiert die Genauigkeit der Filmpositionierung auf im wesentlichen auf der Genauigkeit der Erfassung einer Bildkante und/oder eines markanten Dichtesprunges in einem Bildfeld und der Genauigkeit der Feststellung der zugehörigen Längskoordinate auf dem Film. Es ist aber bekannt, dass bei der Detektion der Bildkanten und/oder der markanten Dichteänderungen innerhalb eines Bildfeldes und bei der Registrierung der zugehörigen Längskoordinaten Fehler auftreten können, die einerseits systembedingt und andererseits statistischer Natur sind. Systembedingte Fehler können neben den zuvor erwähnten Abweichungen der Rollenradien der Transportrollen von ihrem Sollwert und dem temperaturbedingten "Walken" der Rollen beispielsweise durch mechanische Toleranzen der Dichteänderungssensoren auftreten. Auch die Sensoren für die Erfassung der Längskoordinaten des Filmes, üblicherweise ein Zählwerk für die Schritte der Schrittmotoren für die Transportrollen, können zu Abweichungen beitragen, indem Quantisierungsfehler des Zählwerkes auftauchen oder die Steuerelektronik nicht völlig exakte Steuerimpulse liefert. Zu diesen systemimmanenten Fehlern kommen aber auch noch die sogenannten statistischen Fehlerquellen dazu. Neben dem bereits zuvor erwähnten Schlupf kann beispielsweise die Positioniergenauigkeit der Schrittmotoren für die Transportrollen variieren. Auch weisen die Sensoren vielfach ein statistisches Rauschen auf, welches die detektierten Ereignisse oder die registrierten Längskoordinaten des Filmes verfälschen kann. All diese möglichen Fehlerquellen tragen dazu bei, dass die Positionierung des Filmes nicht immer mit der gewünschten Genauigkeit erfolgen kann, da die Vorrichtung und das Verfahren des Standes der Technik auf die Registrierung und das Wiedererkennen eines Einzelereignisses abstellt. Darüber hinaus bedingt dieses bekannte Verfahren, dass die Schrittmotoren für die Filmtransportrollen in der Messstation und in der repositionierenden Station mit derselben Taktfrequenz betrieben werden; vielfach ist es jedoch wünschenswert, die Schrittmotoren in der repositionierenden Bearbeitungsstation mit einer grösseren Schrittweite und einer entsprechend reduzierten Schrittfrequenz zu betreiben.

Aufgabe der vorliegenden Erfindung ist es daher, diesen Nachteilen des Standes der Technik Abhilfe zu schaffen und ein fotografisches Kopiergerät und ein Verfahren zu schaffen, welche es erlauben, insbesondere auch bei Hochleistungsprintern mit einer Stundenleistung von 20.000 und mehr Bildern, in der repositionierenden Station die Filmpositionierung mit hoher Genauigkeit durchzuführen.

All diese und noch weitere Aufgaben werden durch ein fotografisches Kopiergerät gemäss Patentanspruch 1 und durch ein Verfahren gemäss Patentanspruch 8 gelöst.

Erfindungsgemäss wird ein fotografisches Kopiergerät zur Verarbeitung von fotografischem Film umfassend eine Messstation und wenigstens eine räumlich von dieser getrennt und in Filmtransportrichtung nach der Messstation im Filmpfad angeordnete Bearbeitungsstation für den Film und eine Rechen- und Auswerteeinheit, die einerseits mit der Messstation und andererseits mit der Bearbeitungsstation verbunden ist, geschaffen. Das fotografische Kopiergerät weist zudem Abtasteinheiten für den Film in der Messstation und in der Bearbeitungsstation auf, welche gleichfalls mit der Rechen- und Auswerteeinheit in Verbindung stehen, zur Untersuchung des Films nach bestimmten vorgegebenen Kriterien. Aufgrund dieser Kriterien werden verschiedene Ereignisse auf dem Film detektiert und deren örtliches Erscheinen auf dem Film festgestellt. Mit Hilfe dieser Daten wird eine Zuordnung von Ereignissen in der Messstation und in der Bearbeitungsstation getroffen und daraus eine gegebenenfalls erforderliche Korrektur der Filmpositionierung in der Bearbeitungsstation abgeleitet. Insbesondere umfassen die in der Messstation vorgesehenen Abtasteinheiten für den Film wenigstens einen Detektor für Perforationen des Films und einen Spleissdetektor während die Abtasteinheiten in der Bearbeitungsstation durch einen Spleissdetektor und durch wenigstens einen Detektor für die Perforationen des Films gebildet sind.

Vorzugsweise umfassen die Detektoren für die Perforationen jeweils zwei Sensoren für die Perforationen an den Längskanten des Filmes umfassen, die einander gegenüberliegend angeordnet sind.

Es ist vorteilhaft, wenn die Spleissdetektoren und die Perforationsdetektoren räumlich voneinander getrennt angeordnet sind und wenn in Filmtransportrichtung gesehen die Perforationsdetektoren vor den Spleissdetektoren angeordnet sind.

Eine besonders bevorzugte Ausbildungsvariante der Spleissdetektoren umfasst jeweils einen zentralen Spleisssensor und zwei Randsensoren, die in einer Linie angeordnet sind, die senkrecht zu der Transportrichtung des Filmes und parallel zu der Filmebene verläuft.

Dabei weist insbesondere jeder Perforations- und Spleisssensor eine oberhalb des Filmpfades angeordnete Leuchtdiode und eine mit einer Schlitzblende versehene Fotodiode auf, die gegenüberliegend unterhalb des Filmpfades angeordnet ist.

Bei fotografischen Kopiergeräten mit nur einer Bearbeitungsstation für den Film ist diese als Belichtungsstation ausgebildet.

Besonders vorteilhaft, insbesondere für vollständig integrierte Systeme ist es aber, wenn das fotografische Kopiergerät mehr als eine Bearbeitungsstation für den Film im Filmpfad aufweist, welche in der Reihenfolge ihrer Anordnung nach der Messstation als Belichtungsstation oder als Schneidestation ausgebildet sind. Dabei ist es zweckmässig, wenn die Sensoren in den einzelnen Stationen gleich angeordnet sind.

Das Verfahren zur Bearbeitung von entwickeltem fotografischen Film mit aufbelichteten Bildbereichen in dem erfindungsgemässen Kopiergerät, bei dem der Film in einer in einem Filmpfad eines fotografischen Kopiergerätes angeordneten Messstation analysiert wird, wobei neben Farbauszugswerten für die drei Grundfarben Blau, Grün und Rot auch die Lage der Bildbereiche auf dem Film bestimmt wird, und bei dem der Film zur weiteren Bearbeitung in einer räumlich von der Messstation getrennt im Filmpfad angeordneten Bearbeitungsstation in räumlicher Zuordnung zu den analysierten Bildbereichen repositioniert wird, weist im wesentlichen die folgenden Schritte auf:

in der Messstation wird der Film zusätzlich zu der farblichen Analyse der Bildbereiche wenigstens auf Spleisskanten, auf Perforationskanten, auf Bildkanten und ggf. noch weitere Ereignisse untersucht und wird das Auftreten dieser Ereignisse auf dem Film registriert;

die aus den detektierten Ereignissen resultierenden Signale werden an eine Rechen- und Auswerteeinheit weitergeleitet und als Ereignistabelle abgespeichert;

der weitertransportierte Film wird in der Bearbeitungsstation auf Spleisskanten und Perforationskanten untersucht und das Auftreten dieser Ereignisse auf dem Film registriert;

die aus den detektierten Ereignissen resultierenden Signale werden an eine Rechen- und Auswerteeinheit weitergeleitet und als Positionstabelle abgespeichert;

die Tabellen werden hinsichtlich der detektierten Spleisskanten und Perforationskanten und deren registrierten Auftretens auf dem Film verglichen und festgestellte Abweichungen bei der Repositionierung des Filmes, insbesondere der Bildbereiche, in der Bearbeitungsstation berücksichtigt.

Den detektierten Ereignissen auf dem Film wird jeweils die aktuelle Schrittzahl der Schrittmotoren für die Filmtransportrollen in der Messstation und in der Bearbeitungsstation zugeordnet.

Vorzugsweise werden die Schrittmotoren mit unterschiedlicher Schrittweite betrieben, wobei insbesondere der Schrittmotor für die Transportrolle in der Messstation mit der kleineren Schrittweite betrieben wird.

Erfindungsgemäß werden die Bildbereiche in der Bearbeitungsstation durch Weitertransportieren des Filmes um eine zuvor berechnete Strecke repositioniert. Bei der Berechnung der zur Repositionierung erforderlichen Strecke wird auf die Korrelation der in der Ereignistabelle und in der Positionstabelle festgehaltenen Ereignisse abgestellt. Dabei ist der Zusammenhang zwischen der zum Ereignis X gehörenden registrierten Schrittzahl E des Schrittmotors für die Transportrollen in der Messstation und der zum selben Ereignis X gehörenden und erfassten Schrittzahl P des Schrittmotors für die Transportrollen in der Bearbeitungsstation durch die Beziehung

$$P(X) = A \times E(X) + B$$

gegeben, worin A für das Verhältnis der Schrittweiten der Schrittmotoren in der Bearbeitungsstation und in der Messstation steht und B eine Grösse darstellt, die im wesentlichen durch den Zustand der Schrittzähler für die Schrittmotoren im Startzustand des fotografischen Kopiergerätes bestimmt ist.

Weiterhin werden erfindungsgemäß die Grössen A und B während des Weitertransportes des Films zur Repositionierung der Bildbereiche in der Bearbeitungsstation durch Korrelation der Positionstabelle mit der Ereignistabelle laufend neu ermittelt und korrigiert.

In den Filmbereichen zwischen den Spleissereignissen erfolgt die Korrektur der Grössen A und B vorzugsweise durch lineare Regression mehrerer, vorzugsweise 3 -7, während der Repositionierung der Bildbereiche detektierter Perforationsereignisse.

Besonders zweckmässig ist es, wenn die erforderliche Transportstrecke für die Repositionierung des folgenden Bildbereiches mit Hilfe der während der Positionierung des vorhergehenden Bildbereiches neu ermittelten Beziehung zwischen der in der Messstation ermittelten Schrittzahl und der Schrittzahl in der Bearbeitungsstation, insbesondere mit den dabei ermittelten Grössen A und B bestimmt wird.

Vorzugsweise werden die zuletzt ermittelten Grössen A und B auf Plausibilität geprüft werden und verworfen, wenn ihre Werte ausserhalb einer vorgegebenen Schwankungsbreite liegen. Die Repositionierung des nächsten folgenden Bildbereiches, insbesondere die Ermittlung der erforderlichen Transportstrecke, erfolgt in diesen Fällen zweckmässigerweise mit den aus der vorhergehenden Berechnung ermittelten Grössen A und B.

Bei den vorzugsweise eingesetzten fotografischen Kopiergeräten wird der Film in einer als Belichtungsstation ausgebildeten Bearbeitungsstation repositioniert.

Bei einer Variante des erfindungsgemässen fotografischen Kopiergerätes wird der Film entlang des Filmpfades in mehreren Bearbeitungsstationen repositioniert, wobei für jede Bearbeitungsstation eine eigene Positionstabelle für Spleiss- und Perforationsereignisse und die zugehörigen Schrittzahlen der jeweiligen Schrittmotoren ermittelt wird, die Positionstäbelle mit der in der Messstation gewonnenen Ereignistabelle korreliert wird und daraus jeweils für jeden zu positionierenden Bildbereich eine lineare Beziehung zwischen der Schrittzahl in der Messstation und der Schrittzahl in der jeweiligen Bearbeitungsstation gewonnen wird, welche wiederum für die Ermittlung der Transportstrecke zur näherungsweisen Repositionierung des folgenden Bildbereiches in der betreffenden Bearbeitungsstation herangezogen wird.

Bei der zuvor erwähnten besonders vorteilhaften Variante des fotografischen Kopiergerätes wird der Film, in der Reihenfolge der Repositionierungen in den Bearbeitungsstationen, von der Messstation zu einer Belichtungsstation und zu einer Schneidestation transportiert.

Im folgenden wird die Erfindung anhand der Darstellung einer beispielsweisen Ausführungsvariante in den Zeichnungen näher erläutert. Es zeigen:

Fig. 1 eine Funktionsdarstellung eines erfindungsgemässen fotografischen Kopiergerätes,

Fig. 2a eine schematische Darstellung des Filmteils des fotografischen Kopiergerätes nach Fig. 1 in Seitenansicht,

Fig. 2b eine schematische Aufsicht der Anordnung der Messstation und der Bearbeitungsstation(en) aus Fig. 2a,

Fig. 3 die Anordnung der Abtasteinheiten in der Messstation,

Fig. 4a ein Beispiel einer Ereignistabelle in Matrixschreibweise,

Fig. 4b    eine Ereignistabelle in symbolischer Darstellung,

Fig. 5    die Anordnung der Abtasteinheiten in der Bearbeitungsstation,

Fig. 6a    ein Beispiel einer Positionstabelle in Matrixschreibweise,

Fig. 6b    eine Positionstabelle in symbolischer Darstellung und

Fig. 7    ein Diagramm zur Erläuterung des erfindungsgemässen Verfahrens.

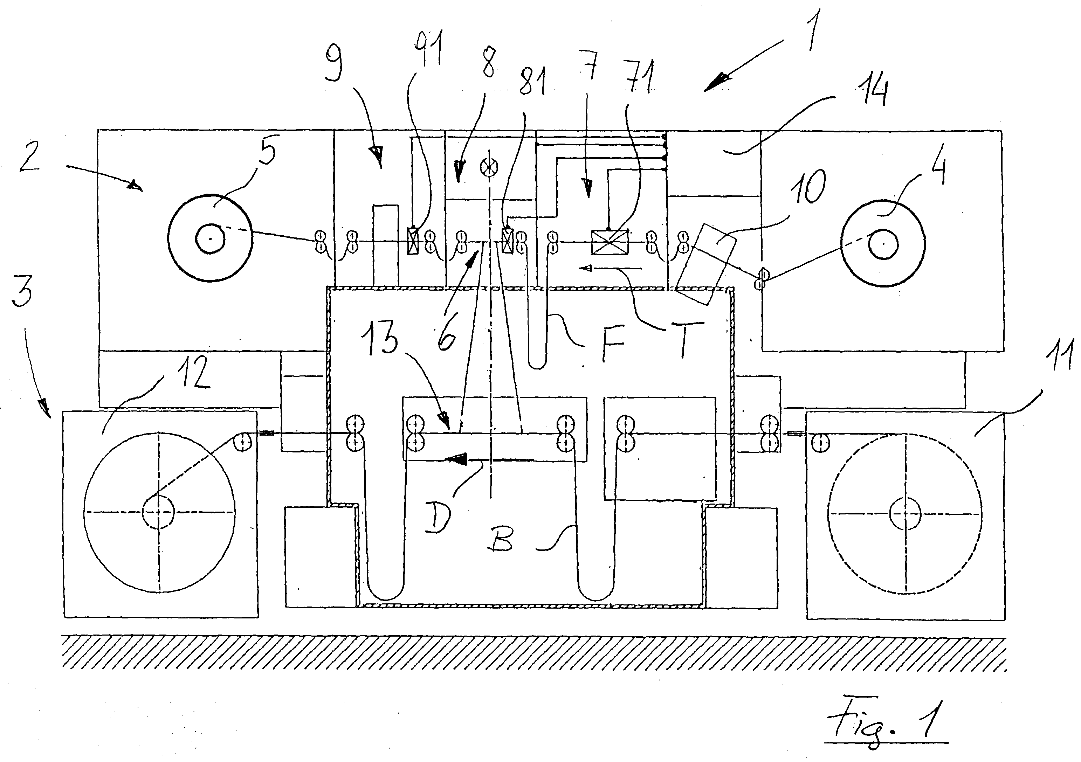

Ein in Fig. 1 schematisch dargestelltes fotografisches Kopiergerät 1 zur Verarbeitung von entwickelten fotografischen Filmen F umfasst als wesentliche Funktionsblöcke einen Filmteil 2 und einen Papierteil 3. Der Filmteil 2 umfasst einen Filmpfad 6, entlang dessen durch den Pfeil T angedeuteten Transportweges für den Film F eine Filmreinigung 10, eine Messstation 7 und eine oder wie im dargestellten Ausführungsbeispiel mehrere Bearbeitungsstationen 8 und 9 angeordnet sind. Insbesondere sind in der Fig. 1 neben der Messstation 7 eine Belichtungsstation 8 und eine weitere Bearbeitungsstation 9 dargestellt, welche beispielsweise eine Kerbstation oder eine Schneidestation für den Film oder beides sein könnte. Die Messstation 7 und jede Bearbeitungsstation 8 bzw. 9 sind jeweils mit Abtasteinheiten 71, 81 bzw. 91 für den Film F ausgestattet, die über in der Fig. 1 nicht näher bezeichnete Verbindungsleitungen mit einer zentralen Rechen- und Auswerteeinheit 14 verbunden sind. In der Rechen- und Auswerteeinheit 14 werden unter anderem die von den Abtasteinheiten 71, 81 bzw. 91 ermittelten Messdaten verarbeitet, und daraus beispielsweise die erforderlichen Kopierlichtmengen ermittelt und an die Belichtungsstation 8 weitergeleitet. Weiters werden die ermittelten Messdaten auch dazu benützt, Informationen für die Repositionierung des Filmes F den Bearbeitungsstationen 8 bzw. 9 zu gewinnen, das heisst anhand der ermittelten Messdaten bezüglich des örtlichen Auftretens bestimmter Ereignisse auf dem Film F wird versucht, eine Zuordnung von Ereignissen in der Messstation 7 und im Bereich der Bearbeitungsstation(en) 8 bzw. 9 zu treffen und gegebenenfalls erforderliche Korrekturen der Repositionierung in der Bearbeitungsstation daraus abzuleiten. Eingangs des Kopiergerätes 1 kann, wie dargestellt, vor der Messstation 7 auch noch eine Filmreinigungsstation 10 vorgesehen sein. Ein- und ausgangsseitig des Kopiergerätes 1 sind Aufnahmevorrichtungen für Abrespektive Aufwickelspulen 4 bzw. 5 für die Filme vorgesehen.

Der Papierteil 3 des Kopiergerätes 1 umfasst einen Papierpfad 13, der unter der Belichtungsstation vorbeiführt. Lichtempfindliches fotografisches Kopiermaterial B, das aus einer eingangsseitig anstellbaren Vorratskassette 11 abgewickelt wird, wird zum Zwecke der Belichtung in die durch den Pfeil D angedeutete Transportrichtung unter der Belichtungsstation 8 vorbeigeführt und zu einer ausgangsseitig anstellbaren Aufwickelkassette 12 transportiert. Soweit entspricht das erfindungsgemässe Kopiergerät den Kopiergeräten des Standes der Technik, beispielsweise dem in der DE-A-38 33 731 beschriebenen Gerät, sodass sich die Beschreibung im folgenden auf die erfindungswesentlichen Unterschiede im Filmteil 2 beschränkt.

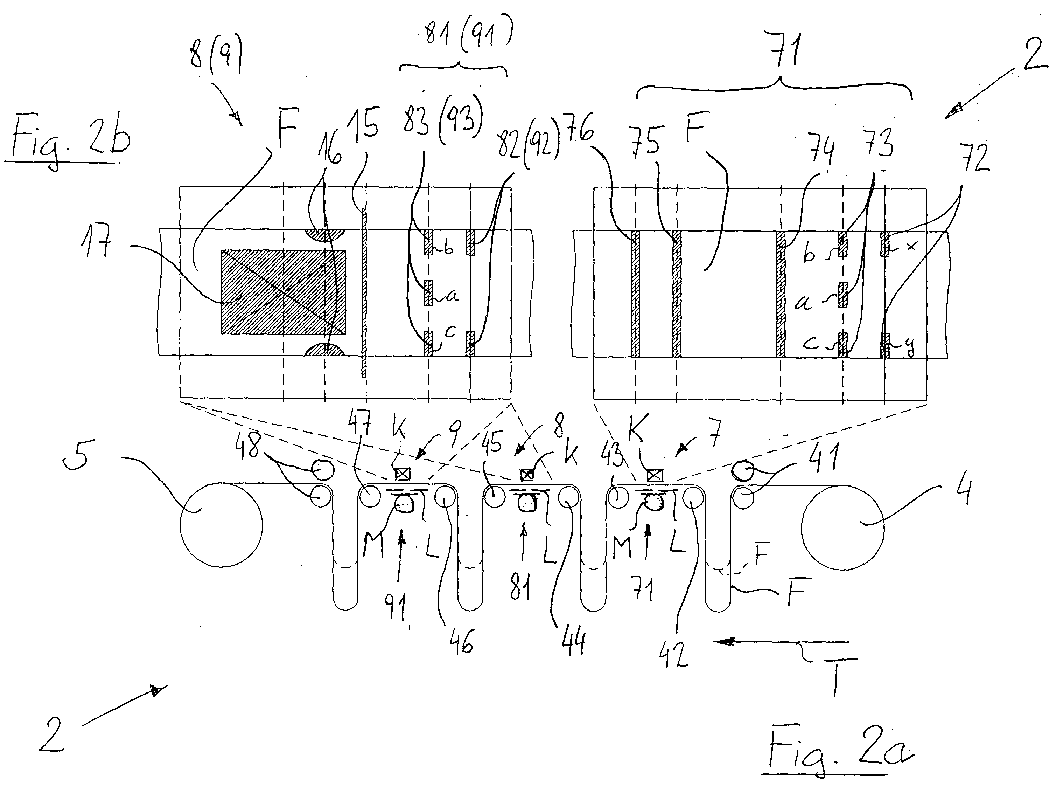

In Fig. 2a und 2b sind der Filmteil 2 und die Anordnung der Abtasteinrichtungen 71, 81 bzw. 91 schematisch dargestellt. Dabei ist ersichtlich (Fig. 2a), dass der Film F jeweils zwischen den einzelnen Stationen in einer zwischen Filmtransportrollen 41, 42 bzw. 43, 44 bzw. 45, 46 bzw. 47, 48 vorgesehenen Schleife variabler Länge geführt ist. Dabei ist in der Fig. 2a bei den Filmtransportrollen 41 und 48 angedeutet, dass es sich jeweils um Rollenpaare, eine vorzugsweise von einem Schrittmotor antreibbare Antriebsrolle und eine Andruckrolle, handelt. Aus Gründen der besseren Uebersicht wurde jedoch bei den Filmtransportrollen 42 bis 47 in den einzelnen Stationen 7, 8 und 9 jeweils auf die Darstellung der Andruckrollen verzichtet. Die Filmschleifenlänge ist variabel, wie in der Darstellung strichliert angedeutet.

Aus der schematischen Darstellung der Abtasteinheiten 71 und 81, bzw. 91 in Fig. 2b ist ersichtlich, dass die in der Messstation 7 vorgesehenen Abtasteinheiten 71 für den Film F wenigstens einen Detektor 72 für Perforationen P des Films F und einen Spleisssensor 73 umfassen. Darüber hinaus umfassen die Abtasteinheiten 71 in der Messstation 7 auch noch einen Detektor 74 für die Filmstege, Sensoren 75 für die spektrale Analyse eines Bildbereiches N, sowie gegebenenfalls noch weitere Detektoren, beispielsweise einen Dichtesensor 76 zur Feststellung der Bildschärfe. Die Abtasteinheiten 81 bzw. 91 in den Bearbeitungsstationen 8 bzw. 9 sind in Filmtransportrichtung gesehen vor den eigentlichen Bearbeitungseinrichtungen angeordnet. In der Fig. 2b wurde dabei auf die gesonderte Darstellung der einzelnen Bearbeitungsstationen 8 bzw 9 mit ihren Bearbeitungseinrichtungen verzichtet, da sie prinzipiell denselben Aufbau besitzen. Zu diesem Zweck wurde in der Darstellung nur symbolisch angedeutet dass es sich bei den Bearbeitungsstationen um eine Belichtungsstation 8 (symbolisch angedeutet durch das Belichtungsfenster 17) oder um eine Kerbstation (angedeutet durch die Kerber 16) bzw. um eine Schneidestation 9 (symbolisch angedeutet durch ein Schneidewerkzeug 15) handelt. Die Abtasteinheiten in den Bearbeitungsstationen 8 bzw. 9 sind jeweils durch wenigstens einen Perforationsdetektor 82 bzw. 92 und einen Spleissdetektor 83 bzw. 93 gebildet.

Es ist vorteilhaft, wenn die Detektoren 72, 82 bzw. 92 für die Perforationen jeweils zwei Sensoren x, y für die Perforationen an den Längskanten des Filmes F umfassen, die einender gegenüberliegend angeordnet sind. Auf diese Weise können auch nur an einer Längskante des Filmes auftretende Perforationsereignisse detektiert werden, beispielsweise, wenn die Perforationen einseitig zugeklebt sind oder wenn sie einseitig ausgerissen sind.

Die Detektoren 72, 73 bzw. 82, 83 bzw. 92, 93 sind vorzugsweise räumlich voneinender getrennt angeordnet. Dabei sind, in Filmtransportrichtung T gesehen, die Perforationsdetektoren 72, 82 bzw. 92 vor den Spleissdetektoren 73, 83 bzw. 93 angeordnet. In einer besonders bevorzugten Ausführungsvariante umfasst jeder Spleissdetektor 73, 83 bzw. 93 einen zentralen Spleisssensor a, und zwei Randsensoren b und c, die in einer Linie angeordnet sind, die senkrecht zu der Transportrichtung T des Filmes F und parallel zur Filmebene verläuft. Auf diese Weise können sowohl die heutzutage üblicherweise zur Verbindung zweier Filmaufträge verwendeten mittig angeordneten Spleisse detektiert werden alsauch an den Filmlängskanten vorgesehene Spleisse (sogenannte "edge splices") zuverlässig erkannt werden. Der vorzugsweise Aufbau der Perforations- und Spleisssensoren ist in Fig. 2a angedeutet. Insbesondere umfasst jeder Sensor eine oberhalb des Filmpfades 6 angeordnete Leuchtdiode K und eine mit einer Schlitzblende L versehene Fotodiode M, die gegenüberliegend unterhalb des Filmpfades 6 angeordnet ist. Derartig aufgebaute Sensoren sind sehr kompakt und platzsparend an den gewünschten Orten in den Filmpfad 6 integrierbar.

Das erfindungsgemässe fotografische Kopiergerät 1 kann neben der Messstation 7 nur eine Bearbeitungsstation umfassen, welche in diesem Fall als Belichtungsstation 8 ausgebildet ist. In einer bevorzugten Bauweise sind jedoch mehr als eine Bearbeitungsstation im Filmpfad 6 vorgesehen. In der Reihenfolge ihrer Anordnung nach der Messstation 7 sind diese als Blichtungsstation 8 oder als Schneidestation 9 ausgebildet.

Zur Bearbeitung des entwickelten fotografischen Filmes F mit aufbelichteten Bildbereichen N wird der Film F in der im Filmpfad 6 angeordneten Messstation 7 zunächst analysiert. Dabei werden neben den Farbauszugswerten für die drei Grundfarben Blau, Grün und Rot auch Daten über die Lage der einzelnen Bildbereiche N auf dem Film bestimmt und zur weiteren Bearbeitung an die Rechen- und Auswerteeinheit 14 weitergeleitet. In der (den) räumlich von der Messstation 7 getrennt im Filmpfad 6 angeordneten Bearbeitungsstation (en) wird der Film F schliesslich in räumlicher Zuordnung zu den analysierten Bildbereichen N zur weiteren Bearbeitung repositioniert.

Das erfindungsgemässe Verfahren umfasst dabei insbesondere die folgenden Verfahrensschritte:

in der Messstation 7 wird der Film F zusätzlich zu der farblichen Analyse der Bildbereiche N wenigstens auf Spleisskanten s, auf Perforationskanten p, auf Bildkanten n und gegebenenfalls noch auf weitere Ereignisse untersucht und wird das Auftreten E(X) dieser Ereignisse auf dem Film F registriert, wobei X für ein Spleissereignis s oder ein Perforationsereignis p steht;

die aus den detektierten Ereignissen resultierenden Messsignale werden an die Rechen- und Auswerteeinheit 14 weitergeleitet und als Ereignistabelle G abgespeichert;

der weitertransportierte Film F wird in der bzw. den Bearbeitungsstation(en) 8 bzw. 9 auf Spleisskanten s und Perforationskanten p untersucht und das Auftreten P(X) dieser Ereignisse X auf dem Film registriert, wobei X entweder für ein Spleissereignis s oder ein Perforationsereignis p steht;

die aus den detektierten Ereignissen resultierenden Messsignale werden an die Rechen- und Auswerteeinheit 14 weitergeleitet und als Positionstabelle O abgespeichert;

die Positionstabelle O wird mit der Ereignistabelle G hinsichtlich der detektierten Spleisskanten s und Perforationskanten p und der abgespeicherten Werte P(X) bzw. E(X) korreliert und festgestellte Abweichungen bei der Repositionierung des Filmes F, insbesondere der Bildbereiche N, in der (den) Bearbeitungsstation(en) 8 bzw. 9 berücksichtigt.

Die Werte P(X) bzw. E(X) entsprechen den an den jeweiligen Schrittmotoren für die in Fig. 2 dargestellten Filmtransportrollen in der Messstation 43 und der Filmtransportrollen in der Bearbeitungsstation(en) 45 bzw. 47 festgestellte Schrittzahlen.

Die Schrittmotoren für den Antrieb der Filmtransportrollen 43, 45 bzw. 47 werden üblicherweise mit unterschiedlichen Schrittweiten betrieben. Vorzugsweise wird der Schrittmotor für die Filmtransportrolle 43 in der Messstation 7 mit einer kleineren Schrittweite betrieben als die Schrittmotoren in den Bearbeitungsstationen. Dies deshalb, da in der Messstation insbesondere auch die farbliche Analyse der Bildfelder N erfolgt, die umso genauer durchgeführt werden kann, je grösser die örtliche Auflösung ist. Beispielsweise wird in der Messtation ein Schrittmotor mit Mikroschrittbetrieb und einer Schrittweite von 0,01 - 0,1 mm/Schritt, vorzugsweise 0,03 mm/Schritt, verwendet, während in den Bearbeitungsstationen Schrittmotoren mit einer Schrittweite von 0,2 - 0.3 mm/Schritt, vorzugsweise 0,25 mm/Schritt eingesetzt wird.

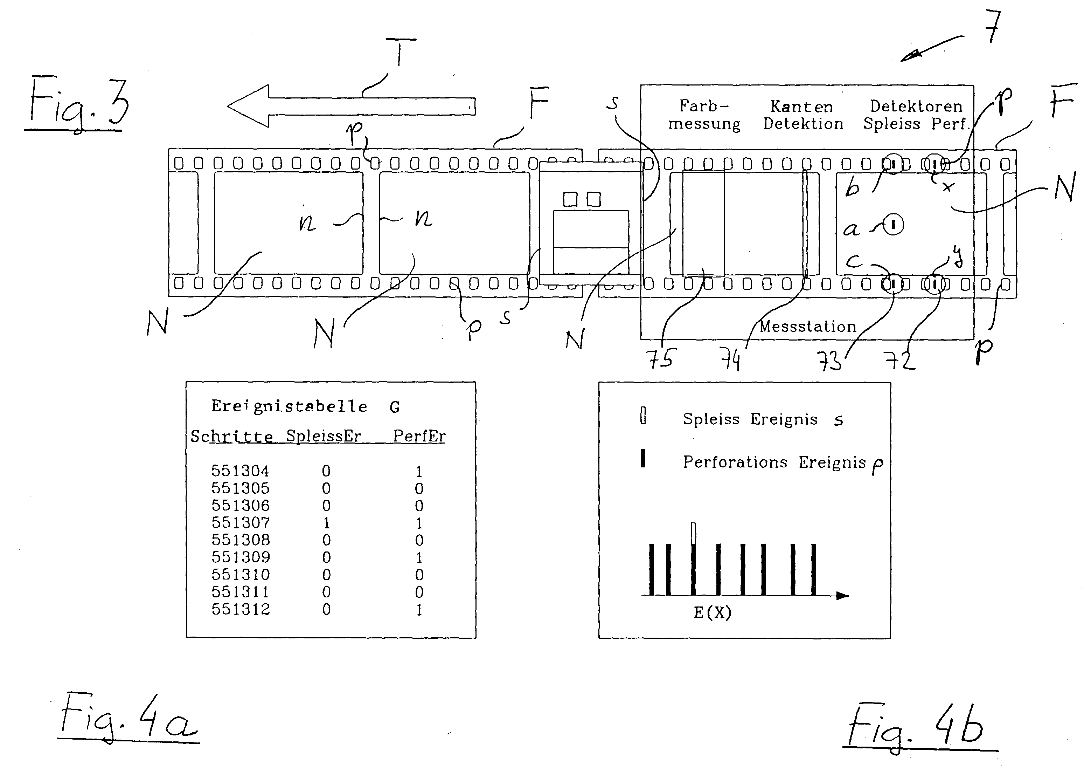

In der Fig. 3 ist die Anordnung der Abtasteinheiten 72 - 75 in der Messstation 7 noch einmal symbolisch dargestellt. Insbesondere sind in Fig. 3 zwei zusammengespleisste Filme F dargestellt, die in Richtung des Pfeiles T durch das foptografische Kopiergerät 1 transportiert werden. Die Perforationskanten sind mit p, die Spleisskanten mit s und die Bildkanten mit n bezeichnet. N bezeichnet die belichteten Bildfelder N, die etwa in vergleichbaren Abständen aufeinanderfolgend auf dem Film F angeodnet sind. Der Abstand zwischen zwei Perforationen ist im allgemeinen genormt und beträgt 4,75 mm.

In Fig. 4a ist ein Beispiel einer Ereignistabelle G in Matrixschreibweise angegeben. Dabei sind in der Matrixdarstellung nur die Perforationsereignisse p und die Spleissereignisse s berücksichtigt. Es versteht sich aber, dass die Matrix noch weitere Spalten umfasst, welche die registrierten Bildkantenereignisse n, spektrale Informationen etc. umfassen können. Fig. 4b ist ein Beispiel für eine symbolische Darstellung der bei einer bestimmten Schrittzahl E(X) des Schrittmotors 43 eingangs der Messstation 7 registrierten Ereignisse. Wiederum ist in der Darstellung aus Gründen der besseren Uebersicht nur auf die Spleissereignisse s und auf die Perforationsereignisse p abgestellt.

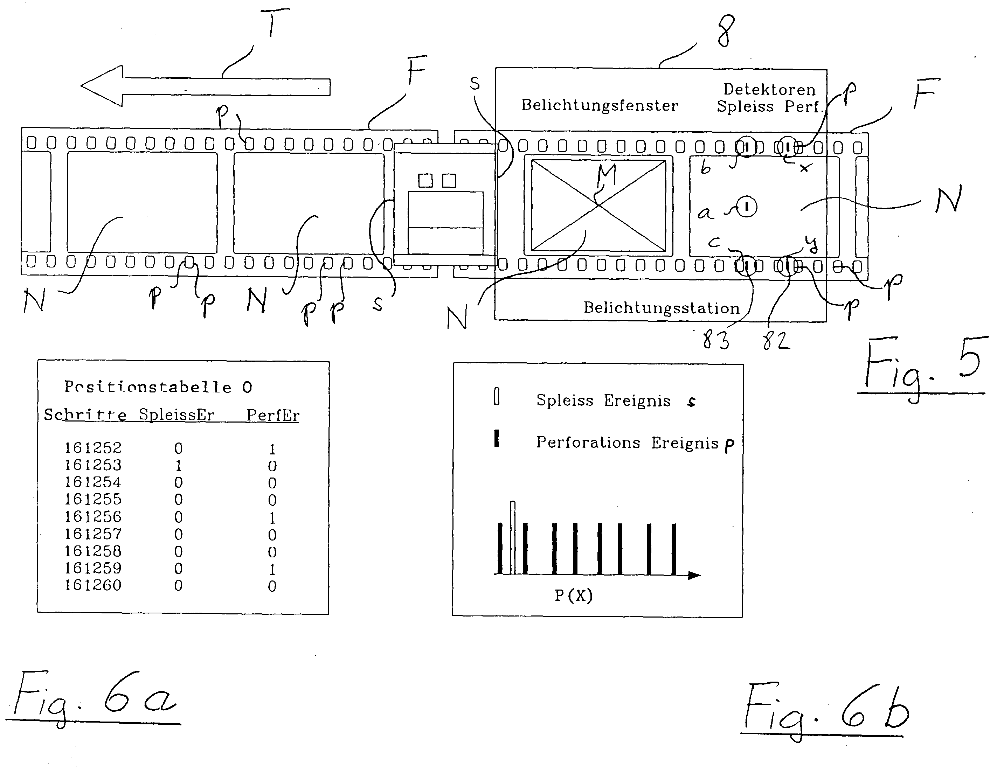

Fig. 5 entspricht im wesentlichen der Darstellung in Fig. 3, nur ist in diesem Fall eine Bearbeitungsstation am Beispiel der Belichtungsstation 8 mit den Detektoren 82 und 83 für Perforationsereignisse p und für Spleissereignisse s dargestellt. Die Belichtungsstation 8 ist durch das Belichtungsfenster 16 symbolisiert. Es versteht sich, dass die Schneidestation 9 einen vergleichbaren Aufbau aufweisen und sich nur durch ihre Bearbeitungseinrichtungen 16 bzw. 15 unterscheiden. Insbesondere ist es besonders zweckmässig, wenn die Anordnung der Sensoren in den einzelnen Stationen, vor allem der Abstand zwischen Perforations- und Spleisssensoren, gleich gewählt wird.

In Fig. 6a ist die Positionstabelle O in Matrixschreibweise angegeben. Die einzelnen Spalten der Matrix umfassen die registrierten Schritte des Schrittmotors für die Filmtransportrollen 45 eingangs der Belichtungsstation 8, die vom Spleissdetektor 83 und vom Perforationsdetektor 82 eingangs der Belichtungsstation 8 detektierten Spleissereignisse s bzw. Perforationsereignisse p. Fig. 6b ist die der Fig. 4b entsprechende symbolische Darstellung der Positionstabelle O in Abhängigkeit von der registrierten Schrittzahl P(X).

Zur Repositionierung der in der Messstation 7 analysierten Bildbereiche N in den Bearbeitungsstationen 8 bzw. 9 wird der Film F um eine zuvor berechnete Strecke weitertransportiert. Insbesondere wird dabei das Bildzentrum des Bildbereiches in der Bearbeitungsstation repositioniert. Als Eingangsdaten für die Berechnung der erforderlichen Transportstrecke dient dabei die in der Messstation zuvor ermittelte zugehörige Schrittzahl des Schrittmotors in der Messstation. Der Zusammenhang zwischen der in der Messstation erfassten Schrittzahl und der in der Bearbeitungsstation gesuchten Schrittzahl zur Repositionierung ist im allgemeinen durch eine lineare Beziehung gegeben. Dabei ist insbesondere der Zusammenhang der zu einem Ereignis X in der Messstation 7 gehörende Schrittzahl E(X) des Schrittmotors für die zugehörigen Transportrollen 43 und der bei der Detektion desselben Ereignisses in der Bearbeitungsstation 8 bzw. 9 registrierten Schrittzahl P(X) des Schrittmotors für die Transportrollen 45 bzw. 47 in der Bearbeitungsstation 8 bzw. 9 durch die Beziehung

$$P(X) = A \times E(X) + B$$

gegeben ist. In dieser Beziehung steht A für das Verhältnis der Schrittweiten der Schrittmotoren in der jeweiligen Bearbeitungsstation 8 bzw. 9 und in der Messstation 7. B stellt eine Grösse dar, die im wesentlichen durch den Zustand der Schrittzähler im Startzustand des fotografischen Kopiergerätes bestimmt ist.

Das Verhältnis der Schrittweiten der Schrittmotoren ist bekannt und wird zunächst als Gerätekonstante betrachtet. Während des Weitertransportes des Filmes F zur Repositionierung der Bildbereiche N in der Bearbeitungsstation 8 bzw. 9 werden die Grössen A und B durch Korrelation der Positionstabelle O mit der Ereignistabelle G laufend neu bestimmt.

Die Ermittlung der Grössen A und B erfolgt dabei in mehreren Stufen mit zunehmender Genauigkeit. Beim Einschalten des fotografischen Kopiergerätes 1 werden die Schrittzähler der Schrittmotoren für die Transportrollen 43, 45 bzw. 47 auf Null gesetzt. Eine erste Näherung der Grösse B kann nun beispielsweise durch Detektion des vorlaufenden Filmendes erfolgen. Dies kann durch ein Signal beim Passieren einer Lichtschranke erfolgen oder auch durch die Synchronisation der Umdrehungsgeschwindigkeiten der Transportrollen 42, 43 bzw. 44, 45 bzw. 46, 47 erfolgen. Die Schrittzahl E(X) und P(X) des zugehörigen Schrittmotors im Augenblick der Synchronisation wird in jeder Station 7, 8 bzw. 9 registriert. Aus diesen Schrittzahlen, der Kenntnis des Verhältnisses der Schrittweiten und der linearen Beziehung zwischen der Schrittzahl in der Messstation 7 und in der jeweiligen Bearbeitungsstation 8 bzw. 9 wird in erster Näherung die Grösse B ermittelt. Die Genauigkeit des Wertes B ist durch die Genauigkeit der Detektion des vorlaufenden Endes des Films gegeben und insbesondere bei Abstellung auf die Synchronisation der zusammengehörigen Filmtransportrollen relativ grob.

Eine zweite deutlich genauere Bestimmung der Grösse B erfolgt durch Vergleich der Schrittzahlen E(X), P(X) im Augenblick der Detektion einer Spleisskante s. Diese erfolgt üblicherweise mit einer Genauigkeit von etwa +/- 0,5 mm. Dies entspricht in der Bearbeitungsstation 8, bzw. 9 bei einer beispielsweisen Schrittweite von 0,25 mm/Schritt einer Positionierungenauigkeit von +/- 2 Schritten.

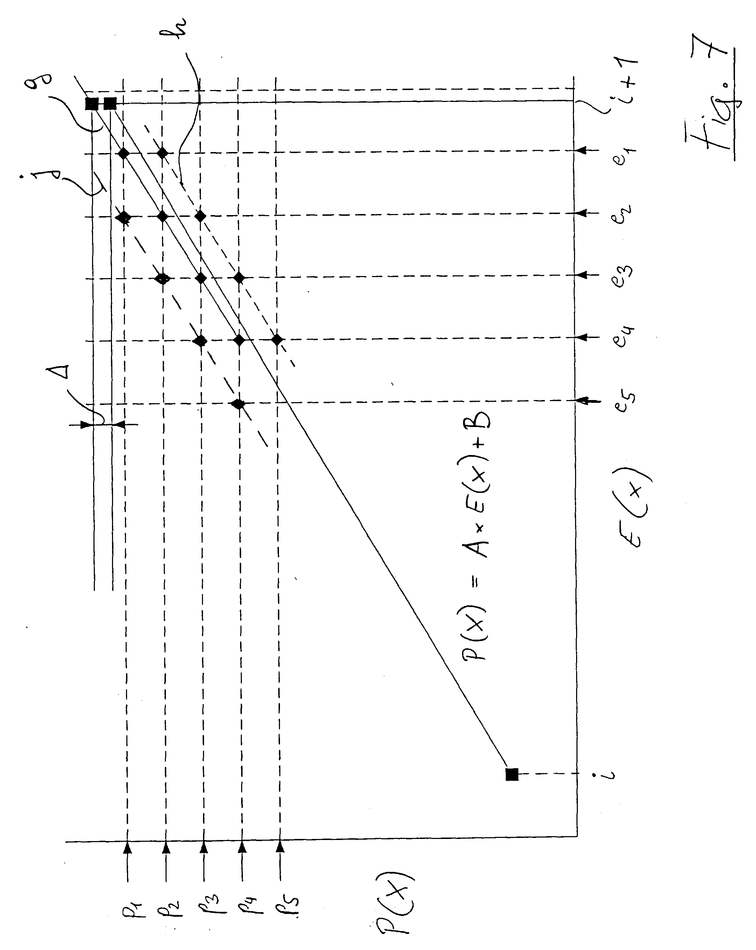

Zwischen den Spleissereignissen s wird zur genaueren Bestimmung der Grösse B und auch zur Ueberprüfung der Gerätekonstanten A auf die in der Messstation 7 und in der Bearbeitungsstation 8 bzw. 9 detektierten Perforationsereignisse p abgestellt. Die in der Messstation 7 ermittelte Ereignistabelle G, insbesondere die zu den Perforationsereignissen p gehörigen Schrittzahlen E(X) des Schrittmotors für die Transportrollen 42 eingangs der Messtation 7, werden gemäss der Beziehung zwischen den Schrittzahlen P(X) und E(X) zu den in der Bearbeitungsstation 8 bzw. 9 detektierten Ereignissen X korreliert. Insbesondere wird mit den 3 - 7 zuletzt während der Repositionierung des Bildbereiches, insbesondere des Bildmittelbereiches M, in der Bearbeitungsstation detektierten Perforationsereignissen und mit den in der Messstation zuletzt vor der angestrebten Zielposition erfassten Perforationsereignissen eine Ausgleichsrechnung angestellt Die bei dieser linearen Regression neu ermittelten Werte für die Grössen A und B werden für die Repositionierung des nachfolgenden Bildbereiches N verwendet usf. Es ist zu berücksichtigen, dass der Wert für B aufgrund der nicht eindeutigen Zuordnung der letzten 3 - 7 Perforationsereignisse beider Stationen mehrdeutig ist. Dem wird durch ein im folgenden anhand von Fig. 7 beschriebenes Auswahlkriterium Rechnung getragen. Dabei wird aber die Plausibilität der Werte A und B, insbesondere die des Multiplikators A überprüft. Dies erfolgt beispielsweise durch Vergleich mit dem gerätespezifischen Schrittweitenverhältnis im Idealzustand des fotografischen Kopiergerätes. Wird festgestellt, dass die zuletzt berechneten Werte für A und B ausserhalb einer vorgegebenen Toleranzbreite liegen, so wird die letzte Korrelation ignoriert und wird die Repositionierung des nächsten Bildbereiches mit den Werten aus der vorhergehenden Korrelation durchgeführt.

In Fig. 7 ist das angewendete lineare Regressionsverfahren symbolisch dargestellt. Mit i ist die Sollschrittzahl des i-ten Bildes in der Messstation 7 bezeichnet. i + 1 beizeichnet die Sollposition bzw. die Sollschrittzahl des Bildes i+1. Die Verbindungsgerade zwischen i und i + 1 entspricht der Geradengleichung mit den bei der Positionierung des i-ten Bildbereiches ermittelten Werten A und B. Die Gerade g stellt die beste Näherung für die Gerade durch die Schnittpunkte der letzten vier vor der Sollposition detektierten Ereignisse in der Messstation $e_1$ - $e_4$ und in der Bearbeitungsstation $p_1$ - $p_4$ dar. Die Geraden h bzw. j stellen analoge Näherungen für die Schnittpunkte der Ereignisse $e_1$ - $e_4$ mit $p_2$ - $p_5$ bzw. $e_2$ - $e_5$ mit $p_1$ - $p_4$ dar. Es ist ersichtlich, dass die Gerade h die geringsten Abweichungen gegenüber der Verbindungsgeraden aufweist, somit insbesondere der Wert B dem zuvor ermittelten Wert am nächsten kommt. Somit ergeben sich die Grössen A und B für die nächste Repositionierung aus dem Verlauf der Geraden g. Der Positionierfehler $\Delta$ ist üblicherweise kleiner als ein Schritt des Schrittmotors für die Transportrollen 45 bzw. 47 in der Bearbeitungsstation, sodass eine sehr genaue Repositionierung erfolgen kann.

Das erfindungsgemässe Verfahren und die erfindungsgemässe Vorrichtung erlauben es sowohl systemimmanente alsauch statistische Fehler in der Repositionierung zu kompensieren. Die Repositionierung in der (den) Bearbeitungsstation(en) ist sehr genau. Der Repositionierungsfehler liegt im allgemeinen unter der Schrittweite der Schrittmotoren für den Filmtransport in den Bearbeitungsstationen. Das Verfahren arbeitet sehr schnell und ist insbesondere zusammen mit sogenannten Hochleistungsprintern vorteilhaft einsetzbar.

**Patentansprüche**

1. Fotografisches Kopiergerät zur Verarbeitung von fotografischem Film umfassend eine Messstation (7) und wenigstens eine räumlich von dieser getrennt und in Filmtransportrichtung (T) nach der Messstation (7) in einem Filmpfad (6) angeordnete Bearbeitungsstation (8, 9) für den Film (F) und eine Rechen- und Auswerteeinheit (14), die einerseits mit der Messstation (7) und andererseits mit der Bearbeitungsstation (8, 9) verbunden ist, und mit Abtasteinheiten (71, 81, 91) für den Film (F) in der Messstation (7) und in der Bearbeitungsstation (8, 9), welche gleichfalls mit der Rechen- und Auswerteeinheit (14) in Verbindung stehen, zur Untersuchung des Films (F) nach bestimmten vorgegebenen Kriterien, um aufgrund dieser Kriterien Ereignisse X auf dem Film (F) zu detektieren und deren Auftreten auf dem Film (F) festzustellen und mit Hilfe dieser Kenntnis eine Zuordnung von Ereignissen X in der Messstation (7) und in der Bearbeitungsstation (8, 9) zu treffen und daraus eine gegebenenfalls erforderliche Korrektur der Filmpositionierung in der Bearbeitungsstation (8, 9) abzuleiten, dadurch gekennzeichnet, dass die in der Messstation (7) vorgesehenen Abtasteinheiten (71) für den Film (F) wenigstens einen Detektor (72) für Perforationen (p) des Films (F) und einen Spleissdetektor (73) umfassen, dass die Abtasteinheiten (81, 91) in der Bearbeitungsstation (8, 9) durch wenigstens einen Detektor (82, 92) für die Perforationen (p) des Films (F) und durch einen Spleissdetektor (83, 93) gebildet sind und dass die Rechen - und Auswerte einheit (14) Mittel aufweist, die für die Repositionierung eines Bildbereiches (N) in der Bearbeitungsstation (8, 9) zurückzulegende Transportstrecke durch eine Korrelationsrechnung festlegt, welche sich auf die Detektion mehrerer Ereignisse X in der Messstation (7) einerseits und in der Bearbeitungsstation (8, 9) andererseits stützt.

2. Fotografisches Kopiergerät nach Anspruch 1, dadurch gekennzeichnet, dass die Abtasteinheiten (71, 81, 91) jeweils zwei Sensoren (x, y) für die Perforationen (p) an den Längskanten des Filmes (F) umfassen, die einander gegenüberliegend angeordnet sind.

3. Fotografisches Kopiergerät nach Anspruch 1 oder 2, dadurch gekennzeichnet, dass die Spleissdetektoren (73, 83, 93) und die Perforationsdetektoren (72, 82, 92) räumlich voneinander getrennt angeordnet sind und dass in Filmtransportrichtung (T) gesehen die Perforationsdetektoren (72, 82, 92) vor den Spleissdetektoren (73, 83, 93) angeordnet sind.

4. Fotografisches Kopiergerät nach einem der vorangehenden Ansprüche, dadurch gekennzeichnet dass jeder Spleissdetektor (73, 83, 93) einen zentralen Spleisssensor (a) und zwei Randsensoren (b, c) umfasst, die in einer Linie angeordnet sind, die senkrecht zu der Transportrichtung (T) des Filmes (F) und parallel zu der Filmebene verläuft.

5. Fotografisches Kopiergerät nach einem der vorangehenden Ansprüche, dadurch gekennzeichnet, dass jeder Perforations- und Spleisssensor (x, y; a, b, c) eine oberhalb des Filmpfades (6) angeordnete Leuchtdiode (K) und eine mit einer Schlitzblende (L) versehene Fotodiode (M) umfasst, die gegenüberliegend unterhalb des Filmpfades (6) angeordnet ist.

6. Fotografisches Kopiergerät nach einem der vorangehenden Ansprüche, dadurch gekennzeichnet, dass die Bearbeitungsstation für den Film (F) eine Belichtungsstation (8) ist

7. Fotografisches Kopiergerät nach einem der vorangehenden Ansprüche, dadurch gekennzeichnet, dass mehr als eine Bearbeitungsstation für den Film (F) im Filmpfad (6) angeordnet sind, welche in der Reihenfolge ihrer Anordnung nach der Messstation (7) als Belichtungsstation (8) und als Schneidestation (9) ausgebildet sind.

8. Verfahren zur Bearbeitung von entwickeltem fotografischen Film (F) mit aufbelichteten Bildbereichen (N), bei dem der Film (F) in einer in einem Filmpfad (6) eines fotografischen Kopiergerätes (1) angeordneten Messstation (7) analysiert wird, wobei neben Farbauszugswerten für die drei Grundfarben Blau, Grün und Rot auch die Lage der Bildbereiche (N) auf dem Film (F) bestimmt wird, und bei dem der Film (F) zur weiteren Bearbeitung in einer räumlich von der Messstation (7) getrennt im Filmpfad (6) angeordneten Bearbeitungsstation (8,9) in räumlicher Zuordnung zu den analysierten Bildbereichen (N) repositioniert wird, gekennzeichnet durch die folgenden Schritte:

in der Messstation (7) wird der Film (F) zusätzlich zu der farblichen Analyse der Bildbereiche (N) wenigstens auf Spleisskanten (s), auf Perforationskanten (p), auf Bildkanten (n) und ggf. noch weitere Ereignisse untersucht und wird das Auftreten dieser Ereignisse X auf dem Film (F) registriert, wobei X für ein Spleissereignis (s) oder für ein Perforationsereignis (p) steht;

die aus den detektierten Ereignissen X resultierenden Signale werden an eine Rechen- und Auswerteeinheit (14) weitergeleitet und als Ereignistabelle (G) abgespeichert, wobei den detektierten Ereignissen X jeweils die aktuelle Schrittzahl von einem Schrittmotor für Filmtransportrollen (43) in der Messstation (7) zugeordnet wird;

der weitertransportierte Film (F) wird in der Bearbeitungsstation (8, 9) auf Spleisskanten (s) und Perforationskanten (p) untersucht und das Auftreten dieser Ereignisse X auf dem Film (F) registriert, wobei X für ein Spleissereignis (s) oder für ein Perforationsereignis (p) steht;

die aus den detektierten Ereignissen X resultierenden Signale werden an die Rechen- und Auswerteeinheit (14) weitergeleitet und als Positionstabelle (O) abgespeichert wobei den detektierten Ereignissen X jeweils die aktuelle Schrittzahl von Schrittmotoren für Filmtransportrollen (45,47) in der Bearbeitungsstation (8,9) zugeordnet wird;

zur Repositionierung der Bildbereiche (N) in der Bearbeitungsstation (8, 9) wird der Film (F) um eine zuvor berechnete Strecke weitertransportiert, wobei zur Berechnung der erforderlichen Transportstrecke der Zusammenhang zwischen der zum Ereignis X gehörenden registrierten Schrittzahl E(X) des Schrittmotors für die Transportrollen (43) in der Messstation (7) und der zum selben Ereignis X gehörenden und erfassten Schrittzahl P(X) des Schrittmotors für die Transportrollen (44, 46) in der Bearbeitungsstation (8, 9)

$$P(X) = A \times E(X) + B$$

verwendet wird, worin A für das Verhältnis der Schrittweiten der Schrittmotoren in der Bearbeitungsstation (8, 9) und in der Messstation (7) steht und B eine Grösse darstellt, die im wesentlichen durch den Zustand der Schrittzähler für die Schrittmotoren im Startzustand des fotografischen Kopiergerätes bestimmt ist, und wobei die Grössen A und B während des Weitertransportes des Films (N) durch Korrelation der Positionstabelle (O) mit der Ereignistabelle (G )hinsichtlich der detektierten Spleisskanten (s) und Perforationskanten (p) und deren registrierten Auftretens P(X) bzw. E(X) auf dem Film laufend neu ermittelt und korrigiert werden.

9. Verfahren nach Anspruch 8, dadurch gekennzeichnet, dass die Schrittmotoren mit unterschiedlicher Schrittweite betrieben werden, wobei insbesondere der Schrittmotor für die Transportrolle (42) in der Messstation (7) mit der kleineren Schrittweite betrieben wird.

10. Verfahren nach einem der Ansprüche 8 oder 9, dadurch gekennzeichnet, dass in den Filmbereichen zwischen den Spleissereignissen (s) die Korrektur der Grössen A und B durch lineare Regression mehrerer, vorzugsweise 3 - 7, während der näherungsweisen Repositionierung der Bildbereiche detektierter Perforationsereignisse (p) erfolgt.

11. Verfahren nach einem der Ansprüche 8 - 10, dadurch gekennzeichet, dass die erforderliche Transportstrecke für die näherungsweise Repositionierung des folgenden Bildbereiches (N) mit Hilfe der während der Positionierung des vorhergehenden Bildbereiches (N) neu ermittelten Beziehung zwischen der in der Messstation (7) ermittelten Schrittzahl E(X) und der Schrittzahl P(X) in der Bearbeitungsstation (8, 9), insbesondere mit den dabei korrigierten Grössen A und B bestimmt wird.

12. Verfahren nach einem der Ansprüche 8 - 11, dadurch gekennzeichnet, dass die zuletzt ermittelten Grössen A und B auf Plausibilität geprüft werden und verworfen werden, wenn ihre Werte ausserhalb einer vorgegebenen Schwankungsbreite liegen, und dass dann die Repositionierung des nächsten folgenden Bildbereiches (N), insbesondere die Ermittlung der erforderlichen Transportstrecke, mit den aus der vorhergehenden Berechnung ermittelten Grössen A und B erfolgt.

13. Verfahren nach einem der Ansprüche 8 - 12, dadurch gekennzeichnet, dass der Film (F) in einer als Belichtungsstation (8) ausgebildeten Bearbeitungsstation repositioniert wird.

14. Verfahren nach Anspruch 13, dadurch gekennzeichnet, dass der Film (F) entlang des Filmpfades (6) in mehreren Bearbeitungsstationen (8, 9) repositioniert wird, wobei für jede Bearbeitungsstation (8, 9) eine eigene Positionstabelle (O) für Spleiss- und Perforationsereignisse (s,p) und die zugehörige örtliche Lage auf dem Film (F) ermittelt wird, die Positionstabelle (O) mit der in der Messstation (7) gewonnenen Ereignistabelle (G) korreliert wird und daraus jeweils für jeden zu repositionierenden Bildbereich (N) eine korrigierte lineare Beziehung zwischen der Schrittzahl E(X) in der Messstation (7) und der Schrittzahl P(X) in der jeweiligen Bearbeitungsstation (8, 9) gewonnen wird, welche wiederum für die Ermittlung der Transportstrecke zur näherungsweisen Repositionierung des folgenden Bildbereiches (N) in der betreffenden Bearbeitungsstation (8, 9) herangezogen wird.

15. Verfahren nach Anspruch 18, dadurch gekennzeichnet, dass der Film (F), in der Reihenfolge der Repositionierungen in den Bearbeitungsstationen, zu einer Belichtungsstation (8), und zu einer Schneidestation (9) transportiert wird.

**Claims**

1. A photographic copying apparatus for processing photographic film, comprising a measuring station (7) and at least one processing station (8, 9) for the film (F), which station is separated spatially from the measuring station (7) and, in the direction of film transport (T), is arranged downstream of the measuring station (7) in a film path (6), and a calculating and evaluation unit (14) that is connected on the one hand to the measuring station (7) and, on the other, to the processing station (8, 9), and having scanning units (71, 81, 91) for the film (F) in the measuring station (7) and in the processing station (8, 9), which units are likewise connected to the calculating and evaluation unit (14), and the purpose of which is to examine the film (F) for specific predetermined criteria in order, on the basis of those criteria, to detect events (X) on the film (F) and to establish their occurrence on the film (F) and with that knowledge to associate events (X) in the measuring station (7) and in the processing station (8, 9) and to derive therefrom any necessary correction of the film positioning in the processing station (8, 9), wherein the scanning units (71) for the film (F) provided in the measuring station (7) comprise at least one detector (72) for perforations (P) in the film (F) and a splice-detector (73), and the scanning units (81, 91) in the processing station (8, 9) comprise at least one detector (82, 92) for the perforations (P) in the film (F) and a splice-detector (83, 93), and the calculating and evaluation unit (14) has means which determine the transport distance that is to be travelled in order to reposition an image area (N) in the processing station (8, 9) by means of a correlation calculation which is based on the detection of a plurality of events (X) in the measuring station (7) on the one hand and in the processing station (8, 9) on the other hand.

2. A photographic copying apparatus according to claim 1, wherein each of the scanning units (71, 81, 91) comprises two sensors (x, y) for the perforations (P) at the longitudinal edges of the film (F), which sensors are arranged opposite one another.

3. A photographic copying apparatus according to claim 1 or claim 2, wherein the splice-detectors (73, 83, 93) and the perforation-detectors (72, 82, 92) are separated from one another spatially and the perforation-detectors (72, 82, 92) are arranged upstream of the splice-detectors (73, 83, 93), viewed in the direction of film transport (T).

4. A photographic copying apparatus according to any one of the preceding claims, wherein each splice-detector (73, 83, 93) comprises one central splice-sensor (a) and two edge sensors (b, c) which are arranged in a row running perpendicular to the direction of transport (T) of the film (F) and parallel to the plane of the film.

5. A photographic copying apparatus according to any one of the preceding claims, wherein each perforation- and splice-sensor (x, y; a, b, c) has a light-emitting diode (K) that is arranged above the film path (6), and a photodiode (M), provided with a slit diaphragm (L), that is arranged opposite the light-emitting diode (K) and below the film path (6).

6. A photographic copying apparatus according to any one of the preceding claims, wherein the processing station for the film (F) is an exposure station (8).

7. A photographic copying apparatus according to any one of the preceding claims, wherein more than one processing station for the film (F) is arranged in the film path (6), which stations, in the order of their arrangement downstream of the measuring station (7), are in the form of an exposure station (8) and a cutting station (9).

8. A process for processing developed photographic film (F) having exposed image areas (N), in which process the film (F) is analysed in a measuring station (7) arranged in a film path (6) of a photographic copying apparatus (1), there being determined, in addition to colour separation values for the three primary colours blue, green and red, also the position of the image areas (N) on the film (F), and in which process the film (F), for the purpose of further processing, is repositioned in spatial association with the analysed image areas (N) in a processing station (8, 9) that is arranged in the film path (6) in such a manner that it is separated spatially from the measuring station (7), the process having the following steps:

in the measuring station (7), the film (F), in addition to undergoing colour analysis of the image areas (N), is examined at least for splice edges (s), perforation edges (p), image edges (n) and, where appropriate, also for other events, and the occurrence of those events (X) on the film (F) is recorded, X representing a splice event (s) or a perforation event (p);

the signals resulting from the detected events (X) are transmitted to a calculating and evaluation unit (14) and stored in the form of an event table (G), the current step number of a stepping motor for the film transport rollers (43) in the measuring station (7) being associated with the detected events (X);

the further-transported film (F) is examined in the processing station (8, 9) for splice edges (s) and perforation edges (p), and the occurrence of those events (X) on the film (F) is recorded, X representing a splice event (s) or a perforation event (p);

the signals resulting from the detected events (X) are transmitted to the calculating and evaluation unit (14) and stored in the form of a position table (O), the current step number of the stepping motors for film transport rollers (45, 47) in the processing station (8, 9) being associated with the detected events (X);

in order to reposition the image areas (N) in the processing station (8, 9) the film (F) is transported a previously calculated distance further, there being used to calculate the necessary transport distance the relationship between the recorded step number (E(X)), belonging to the event X, of the stepping motor for the transport rollers (43) in the measuring station (7) and the detected step number (P(X)), belonging to the same event X, of the stepping motor for the transport rollers (44, 46) in the processing station (8, 9):

$$P(X) = A \times E(X) + B$$

in which A represents the ratio of the step sizes of the stepping motors in the processing station (8, 9) and in the measuring station (7) and B represents a quantity that is determined essentially by the state of the step-counters for the stepping motors in the starting state of the photographic copying apparatus, and the quantities A and B being continuously re-ascertained and corrected during the further transport of the film (N) by correlating the position table (O) with the event table (G) in respect of the detected splice edges (s) and perforation edges (p) and their recorded occurrence (P(X) and E(X)) on the film.

9. A process according to claim 8, wherein the stepping motors are driven with different step sizes, the stepping motor for the transport roller (42) in the measuring station (7) especially being driven with the smaller step size.

10. A process according to either claim 8 or claim 9, wherein, in the film areas between the splice events (s), the correction of the quantities A and B is effected by linear regression of several, preferably from 3 to 7, perforation events (p) detected during the approximate repositioning of the image areas.

11. A process according to any one of claims 8 to 10, wherein the transport distance necessary for the approximate repositioning of the following image area (N) is determined with the aid of the relationship, which has been re-ascertained during the positioning of the preceding image area (N), between the step number (E(X)) ascertained in the measuring station (7) and the step number (P(X)) in the processing station (8, 9), especially using the quantities A and B corrected in the process.

12. A process according to any one of claims 8 to 11, wherein the last-ascertained quantities A and B are checked for plausibility and are discarded if their values lie outside a predetermined range of fluctuation, and then the repositioning of the next following image area (N), especially the ascertainment of the necessary transport distance, is effected using the quantities A and B ascertained from the previous calculation.

13. A process according to any one of claims 8 to 12, wherein the film (F) is repositioned in a processing station that is in the form of an exposure station (8).

14. A process according to claim 13, wherein the film (F) is repositioned along the film path (6) in several processing stations (8, 9), a position table (O) for splice and perforation events (s, p) and the associated local position on the film (F) being determined for each individual processing station (8, 9), the position table (O) being correlated with the event table (G) obtained in the measuring station (7) and, for each image area (N) to be repositioned, a corrected linear relationship between the step number (E(X)) in the measuring station (7) and the step number (P(X)) in the relevant processing station (8, 9) being obtained therefrom, which relationship is in turn used to ascertain the transport distance for the approximate repositioning of the following image area (N) in the relevant processing station (8, 9).

15. A process according to claim 8, wherein the film (F) is transported, in the sequence of the repositioning operations in the processing stations, to an exposure station (8) and to a cutting station (9).

**Revendications**

1. Tireuse photographique pour le traitement d'un film photographique, comportant une station de mesure (7) et au moins une station de traitement (8, 9), qui en est séparée dans l'espace et qui est disposée sur un chemin (6) du film, après la station de mesure (7) dans le sens (T) de transport du film, pour le film (F) et une unité de calcul et de traitement (14), qui est reliée d'une part avec la station de mesure (7) et d'autre part avec la station de traitement (8, 9), et comportant, pour le film, dans la station de mesure (7) et dans la station de traitement (8, 9), des organes de repérage (71, 81, 91) qui sont également reliés à l'unité de calcul et de traitement (14), pour examiner le film (F) selon des critères prescrits déterminés, pour, sur la base de ces critères, détecter des événements X sur le film (F) et déterminer leur survenance sur le film (F) et, à l'aide de cette connaissance, trouver une correspondance entre des événements (X) dans la station de mesure (7) et dans la station de traitement (8, 9) et en déduire une correction éventuellement nécessaire du positionnement du film dans la station de traitement (8, 9), caractérisée par le fait que les organes de repérage (71), prévus dans la station de mesure (7), pour le film (F) comportent au moins un détecteur (72) pour perforations (p) du film (F) et un détecteur de collure (73), que les organes de repérages (81, 91) dans la station de traitement (8, 9) sont formés par au moins un détecteur (82, 92) pour les perforations (p) du film (F) et par un détecteur de collure (83, 93) et que l'unité de calcul et de traitement (14) présente des moyens qui définissent la distance de transport à parcourir dans la station de traitement (8, 9) pour le repositionnement d'un champ d'image (N), au moyen d'un calcul de corrélation qui s'appuie sur la détection de plusieurs événements (X) à dans la station de mesure (7) d'une part et dans la station de traitement (8, 9) d'autre part.

2. Tireuse photographique selon la revendication 1, caractérisée par le fait que les organes de repérage (71, 81, 91) comportent chacun, pour les perforations (p) sur les bords longitudinaux du film (F), deux détecteurs (x, y) qui sont disposés en face l'un de l'autre.

3. Tireuse photographique selon la revendications l ou 2, caractérisée par le fait que les détecteurs de collure (73, 83, 93) et les détecteurs de perforation (72, 82, 92) sont disposés séparément l'un de l'autre dans l'espace et que, vu dans le sens (T) du transport du film, les détecteurs de perforation (72, 82, 92) sont disposés en avant des détecteurs de collure (73, 83, 93).

4. Tireuse photographique selon l'une des revendications précédentes, caractérisée par le fait que chaque détecteur de collure (73, 83, 93) comporte un détecteur de collure central (a) et deux détecteurs en bordure (b, c) qui sont disposés sur une ligne qui est orientée perpendiculairement au sens du transport (T) du film (F) et parallèlement au plan du film.

5. Tireuse photographique selon l'une des revendications précédentes, caractérisée par le fait que chaque détecteur de perforation et de collure (x, y; a, b, c) comporte une diode électroluminescente (A) disposée au-dessus du chemin (6) du film et une photodiode, munie d'un diaphragme à fente (L), qui est disposée en face d'elle, en dessous du chemin (6) du film.

**6.** Tireuse photographique selon l'une des revendications précédentes, caractérisée par le fait que la station de traitement pour le film (F) est une station d'exposition (8).

**7.** Tireuse photographique selon l'une des revendications précédentes, caractérisée par fait que sur le chemin (6) du film sont disposées, pour le film (F), plus d'une station de traitement qui, dans la succession de leur disposition après la station de mesure (7), sont conçues en tant que station d'exposition (8) et que station de cisaillage (9).

**8.** Procédé de traitement d'un film photographique développé (F) comportant des champs d'image exposés (N), dans lequel le film (F) est analysé dans une station de mesure (7) disposée sur un chemin (6) du film d'une tireuse photographique (1), procédé dans lequel en plus des valeurs de sélection de couleur pour les trois couleurs de base bleu, vert et rouge, est également déterminée la position des champs d'image (N) sur le film (F), et dans lequel, pour la poursuite du traitement dans une station de traitement (8, 9) disposée sur le chemin (6) du film, séparément de la station de mesure (7) dans l'espace, le film (F) est repositionné en correspondance spatiale avec les champs d'image (N) analysés, caractérisé par les pas suivants:

dans la station de mesure (7), en plus de l'analyse chromatique des champs d'image (N), le film (F) est étudié en ce qui concerne au moins les bords de collure (S), les bords de perforation (p), les bords d'image (n) et éventuellement encore d'autres événements, et la survenance de ces événements (X) est enregistrée sur le film (F), X représentant un événement collure (s) ou un événement perforation (p);
les signaux résultants des événements détectés (X) sont transmis à une unité de calcul et de traitement (14) et mémorisés sous forme d'un tableau d'événements (G), à chacun des événements X détectés correspondant le nombre de pas réels d'un moteur pas à pas pour rouleaux (43) de transport du film dans la station de mesure (7);
le film (F), transporté plus loin, est étudié, dans la station de traitement (8, 9), en ce qui concerne les bords de collure (s) et les bords de perforation (p) et la survenance de ces événements X est enregistrée sur le film (F), X représentant un événement collure (s) ou un événement perforation (p);
les signaux résultant des événements X détectés sont transmis à l'unité de calcul et de traitement (14) et mémorisés sous forme de tableau de positions (O), à chacun des événements X détectés correspondant le nombre de pas réel de moteurs pas à pas pour des rouleaux (45, 47) de transport du film dans la station de traitement (8,9);
pour le repositionnement des champs d'image (N) dans la station de traitement (8,9), le film (F) est transporté à nouveau d'une longueur précédemment calculée, étant précisé que, pour le calcul de la distance de transport nécessaire, on emploie la relation entre le nombre de pas E(X), appartenant à l'événement X et enregistré, du moteur pas à pas pour les rouleaux de transport (43) dans la station de mesure (7) et le nombre de pas P(X), appartenant au même événement (X et saisi, du moteur pas à pas pour le rouleau de transport (44, 46) dans la station de traitement (8,9)

$$P(X) = A \times E(X) + B$$

A étant le rapport des valeurs du pas des moteurs pas à pas dans la station de traitement (8, 9) et dans la station de mesure (7) et B représentant une grandeur qui est essentiellement déterminée par l'état des compteurs de pas pour les moteurs pas à pas lorsque la tireuse photographique est arrêtée, et les grandeurs A et B étant en permanence à nouveau déterminées et corrigées, pendant que le film (N) est à nouveau transporté, par corrélation du tableau de positions (O) avec le tableau d'événements (G) en ce qui concerne les bords de collure (s) et les bords de perforation (p) détectés et leur survenance enregistrée P(X) ou E(X) sur le film.

**9.** Procédé selon la revendication, caractérisé par le fait que les moteurs pas à pas sont exploités avec une valeur du pas différente, le moteur pas à pas pour le rouleau de transport (42) dans la station de mesure (7) étant en particulier exploité avec la plus petite valeur du pas.

**10.** Procédé selon l'une des revendications 8 ou 9, caractérisé par le fait que dans les zones du film situées entre les événements collure (s), la correction des grandeurs A et B se fait par régression linéaire de plusieurs, de préférence 3-7, événements perforation (p) détectés pendant le repositionnement approximatif des champs d'image.

**11.** Procédé selon l'une des revendications 8-10, caractérisé par le fait que la distance de transport nécessaire pour le repositionnement approximatif du champ d'image (N) suivant est déterminée à l'aide de la relation que l'on vient d'établir, pendant le positionnement du champ d'image (N) précédent, entre le nombre de pas E(X) déterminé dans la station de mesure (7) et le nombre de pas P(X) dans la station de traitement (8, 9), en particulier avec les grandeurs A et B qui y ont été corrigées.

12. Procédé selon l'une des revendications 8-11, caractérisé par le fait que les grandeurs A et B établies en dernier lieu sont vérifiées pour savoir si elles sont plausibles et sont écartées si leurs valeurs se situent à l'extérieur d'une amplitude de variation prescrite, et qu'alors le repostionnement du champ d'image (N) qui vient immédiatement à la suite, en particulier l'établissement de la longueur de transport nécessaire, se font avec les grandeurs A et B établies à partir du calcul précédent.

13. Procédé selon l'une des revendications 8-12, caractérisé par le fait que le film (F) est repositionné dans une station de traitement conçue en tant que station d'exposition (8).

14. Procédé selon la revendication 13, caractérisé par le fait que le film (F) est repositionné le long du chemin (6) du film dans plusieurs stations de traitement (8, 9), procédé dans lequel, pour chaque station de traitement (8, 9), un tableau de positions propre (O) pour événements coulure et perforation (s,p) et la position correspondante sur le film (F) sont établis, le tableau de positions (O) est corrélé avec le tableau d'événements (G) obtenu dans la station de mesure (7) et, à partir de cela, pour chaque champ d'image (N) à repositionner, une relation linéaire, corrigée, entre le nombre de pas E(X) dans la station de mesure (7) et le nombre de pas P(X) dans la station de traitement respectif (8,9) est obtenue, relation à laquelle on fait à nouveau appel pour établir la distance de transport pour le repositionnement approximatif du champ d'image suivant (N) dans la station de traitement (8, 9) en question.

15. Procédé selon la revendication 18, caractérisé par le fait que le film (F) est transporté, dans la succession des repositionnements dans les stations de traitement, à une station d'exposition (8) et une station de cisaillage (9).

Fig. 1

EP 0 534 035 B1

EP 0 534 035 B1

Fig. 2b

Fig. 2a

16

Fig. 3

Fig. 4a

Fig. 4b

**Fig. 5**

Detektoren Spleiss Perf.
Belichtungsfenster
Belichtungsstation

N  F  P  8  83  82  M  S  T  N  F  x  y  a  b  c

**Fig. 6b**

Spleiss Ereignis s
Perforations Ereignis P

P(X)

**Fig. 6a**

Positionstabelle 0

| Schritte | SpleissEr | PerfEr |
|----------|-----------|--------|
| 161252 | 0 | 1 |
| 161253 | 1 | 0 |
| 161254 | 0 | 0 |
| 161255 | 0 | 0 |
| 161256 | 0 | 1 |
| 161257 | 0 | 0 |
| 161258 | 0 | 0 |
| 161259 | 0 | 1 |
| 161260 | 0 | 0 |

$$P(x) = A \times E(x) + B$$

Fig. 7

EP 0 534 035 B1